# EUROPEAN PATENT APPLICATION

(11) **EP 1 424 824 A1**
(43) Date of publication of application: **02.06.2004**
(21) Application number: 02292928.5
(22) Date of filing: 27.11.2002
(51) Int. Cl.: H04L 29/06

(54) **Voice-over-internet-protocol-system with information delivery capability**

(71) Applicant: ALCATEL, 75008 Paris (FR)
(72) Inventor: Bouwen, Jan Alfons Albert, 2000 Antwerpen (BE)
(74) Representative: Narmon, Gisèle Marie Thérèse

(57) **Abstract**

To stimulate a market introduction of Voice-over-Internet-Protocol (VoIP) service-orientatedly, systems with terminals (1,2) and networks (3) are provided with storage-stations (4) for storing information to be supplied in response to trigger-packets originating from sending terminals (1) via the Internet Protocol to receiving terminals (2) in the form of data-packets via the Internet Protocol during calls comprising voice-packets exchanged between said terminals (1,2) via the Internet Protocol, and as a result an additional service for VoIP has been created. Said prestored information comprises video, like pictures of users or actors or cartoon characters, and possibly audio, like sayings or exclamations, for supporting said calls. Said systems can be push systems with sending sides being in control or pull systems with receiving sides being in control, with said trigger-packets comprising indications for selecting information-parts to be supplied, to give users at sending terminals (1) the possibility of selecting information-parts prestored in said storage-station.

## Description

The invention relates to a system for exchanging voice-packets via an Internet Protocol and comprising a first terminal for transmitting said voice-packets via a network to a second terminal for receiving said voice-packets, which voice-packets form part of a call.

Said first and second terminal for example each correspond with a personal computer provided with Voice-over-Internet-Protocol (VoIP) software and a headset and a modem coupled to said network for making so-called VoIP calls.

A prior art system is known from US 6,404,764, which discloses a VoIP system and method with a gateway between terminal and network for allowing Plain Old Telephone Service (POTS) terminals to be used for POTS calls as well as VoIP calls. Said gateway prevents that, during a VoIP market introduction period, in each household there should be two kinds of terminals for making calls: POTS terminals and VoIP terminals, and therefore stimulates such a market introduction of VoIP.

The known system is disadvantageous, inter alia, due to requiring a special gateway for stimulating a market introduction of VoIP.

It is an object of the invention, inter alia, of providing a system as defined in the preamble which stimulates a market introduction of VoIP more service-orientatedly.

The system according to the invention is characterised in that said network comprises a storage-station for storing information to be supplied during said call to said second terminal in the form of at least one data-packet via the Internet Protocol in response to at least one trigger-packet originating from said first terminal via the Internet Protocol.

By providing the network with the storage-station and supplying the information during the VoIP call from the storage-station to the second terminal, an additional service for VoIP has been created. A first user at the first terminal has the option of initiating said supplying of information, like for example a picture of said first user or his homepage etc. prestored in said storage-station, and a second user at the second terminal receives this information during said call and thereby supporting said call.

A first embodiment of the system according to the invention is defined by claim 2.

By providing said voice-packets with at least audio and said data-packet with at least video, the VoIP call is an audio call supported by visual information. In addition, said voice-packets may further comprise for example video etc. and/or said data-packet may further comprise for example audio etc. Then the VoIP call is for example an audiovisual call supported by audio and visual information. Said audio and visual information then for example comprises a picture with an image or a first user's facial expression etc. together with his favorite saying or exclamation etc. all prestored in said storage-station.

A second embodiment of the system according to the invention is defined by claim 3.

By sending said trigger-packet from said first terminal to said storage-station directly, a so-called push system has been created, with the first user being in control.

A third embodiment of the system according to the invention is defined by claim 4.

By introducing said information-parts, with each information-part being supplyable in the form of at least one data-packet via the Internet Protocol, with said trigger-packet comprising an indication for selecting at least one information-part to be supplied, said first user has the possibility of selecting information-parts prestored in said storage-station. The information-parts for example each comprise an actor, a cartoon character etc. each one for example saying his thing or generating his exclamation etc. A first group of information-parts is for example free available and/or is for example exchanged without being billed, a second group for example needs a subscription and/or is for example exchanged while being billed etc.

A fourth embodiment of the system according to the invention is defined by claim 5.

By sending said trigger-packet from said first terminal to said second terminal, with said second terminal in response to said trigger-packet generating a further trigger-packet to be sent to said storage-station, said trigger-packet indirectly triggers said supplying and a so-called pull system has been created, with the second user having the options of for example accepting and refusing etc.

A fifth embodiment of the system according to the invention is defined by claim 6.

By introducing said information-parts, with each information-part being supplyable in the form of at least one data-packet via the Internet Protocol, with said trigger-packet and said further trigger-packet comprising an indication for selecting at least one information-part to be supplied, said first user has the possibility of selecting information-parts prestored in said storage-station. The information-parts for example each comprise an actor, a cartoon character etc. each one for example saying his thing or generating his exclamation etc. A first group of information-parts is for example free available and/or is for example exchanged without being billed, a second group for example needs a subscription and/or is for example exchanged while being billed etc.

The invention also relates to a first terminal for use in a system for exchanging voice-packets via an Internet Protocol and comprising said first terminal for transmitting said voice-packets via a network to a second terminal for receiving said voice-packets, which voice-packets form part of a call, and to a second terminal for use in a system for exchanging voice-packets via an Internet Protocol and comprising a first terminal for transmitting said voice-packets via a network to said second terminal for receiving said voice-packets, which voice-packets form part of a call.

The first and second terminal according to the invention are each characterised in that said network comprises a storage-station for storing information to be supplied during said call to said second terminal in the form of at least one data-packet via the Internet Protocol in response to at least one trigger-packet originating from said first terminal via the Internet Protocol.

The invention further relates to a storage-station for use in a system for exchanging voice-packets via an Internet Protocol and comprising a first terminal for transmitting said voice-packets via a network to a second terminal for receiving said voice-packets, which voice-packets form part of a call.

The storage-station according to the invention is characterised in that said network comprises said storage-station for storing information to be supplied during said call to said second terminal in the form of at least one data-packet via the Internet Protocol in response to at least one trigger-packet originating from said first terminal via the Internet Protocol.

The invention yet further relates to a method for use in a system for exchanging voice-packets via an Internet Protocol and comprising a first terminal for transmitting said voice-packets via a network to a second terminal for receiving said voice-packets, which voice-packets form part of a call.

The method according to the invention is characterised in that said network comprises a storage-station for storing information, with said method comprising the step of supplying said information during said call to said second terminal in the form of at least one data-packet via the Internet Protocol in response to at least one trigger-packet originating from said first terminal via the Internet Protocol.

Embodiments of the first and second terminal according to the invention and of the storage-station according to the invention and of the method according to the invention correspond with the embodiments of the system according to the invention.

The invention is based upon an insight, inter alia, that the VoIP call itself should be made more interesting when stimulating a market introduction, and is based upon a basic idea, inter alia, that, in a packet environment, data-packets with prestored supporting information can be combined easily with voice-packets.

The invention solves the problem, inter alia, of providing a system which stimulates a market introduction of VoIP more service-orientatedly, and is advantageous, inter alia, in that additional services for VoIP have been created.

These and other aspects of the invention will be apparent from and elucidated with reference to the embodiments(s) described hereinafter.

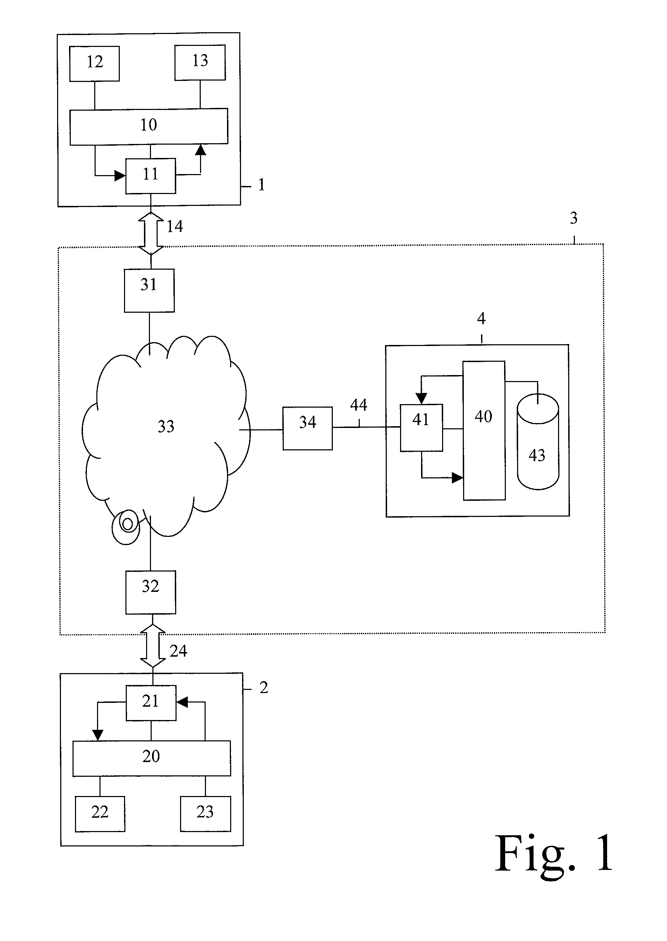

Figure 1 illustrates in block diagram form a system according to the invention comprising a first terminal according to the invention and a second terminal according to the invention and a storage-station according to the invention.

The system according to the invention shown in Figure 1 like for example a system for fixed and/or mobile communication comprises a first terminal 1, a second terminal 2 and a network 3. Terminal 1 comprises a processor-system 10 and a transceiver 11 of which an input is coupled to an output of processor-system 10 and of which an output is coupled to an input of processor-system 10 and of which a control in/output is coupled to a control in/output of processor-system 10 and of which an in/output is coupled via a fixed or mobile connection 14 to network 3. Processor-system 10 is further coupled to a man-machine-interface (mmi) 12 and to a memory 13. Transceiver 11 comprises a transmitter and a receiver and may further comprise one or more modems, filters, amplifiers, converters, (de)packetizers etc.

Terminal 2 comprises a processor-system 20 and a transceiver 21 of which an input is coupled to an output of processor-system 20 and of which an output is coupled to an input of processor-system 20 and of which a control in/output is coupled to a control in/output of processor-system 20 and of which an in/output is coupled via a fixed or mobile connection 24 to network 3. Processor-system 20 is further coupled to a man-machine-interface (mmi) 22 and to a memory 23. Transceiver 21 comprises a transmitter and a receiver and may further comprise one or more modems, filters, amplifiers, converters, (de)packetizers etc.

Network 3 comprises a first network-unit 31 coupled to said connection 14 and a second network-unit 32 coupled to said connection 24 and a sub-network 33 like for example (parts of) the Internet. Sub-network 33 is coupled to both network-units 32 and 33 and to a third network-unit 34 which via a usually fixed connection 44 is coupled to a storage-station 4.

Storage-station 4 comprises a processor-system 40 and a transceiver 41 of which an input is coupled to an output of processor-system 40 and of which an output is coupled to an input of processor-system 40 and of which a control in/output is coupled to a control in/output of processor-system 40 and of which an in/output is coupled to connection 44. Processor-system 40 is further coupled to a memory 43. Transceiver 41 comprises a transmitter and a receiver and may further comprise one or more modems, filters, amplifiers, converters, (de)packetizers etc.

Terminals 1,2 for example each correspond with personal computers with mmi's 12,22 for example each comprising a keyboard and a headset and a monitor/display and with processor-systems 10,20 for example each comprising Voice-over-Internet-Protocol (VoIP) software based upon for example the Session Initiation Protocol and/or the H.323 protocol as described in US 6,404,764 hereby incorporated by reference (said software is for example stored in memory 13 or in a processor-memory forming part of processor-system 10 and runs via said processor-system 10). Alternatively, terminals 1,2 may for example correspond with ordinary telephone terminals, with processor-systems 10,20 then for example each forming part of a gateway as described in US 6,404,764.

To make a VoIP call from terminal 1 to terminal 2, a first user at terminal 1 enters an address (for example via the keyboard or the mouse of mmi 12 or via a microphone of the headset of mmi 12 and voice recognition software etc.) like for example a telephone number or a Uniform Resource Locater or URL etc., which address defines terminal 2, and is converted by either processor-system 10 directly or by processor-system 10 indirectly after having communicated with for example network-unit 31 and/or network-unit 32 and/or sub-network 33 and under control of said VoIP software into an IP address defining terminal 2. Or, said first user enters said IP address directly (for example via the keyboard or the mouse of mmi 12 or via a microphone of the headset of mmi 12 and voice recognition software etc.).

In response to the entering of said address, under control of said VoIP software, terminals 1 and 2 exchange set-up-packets with each other via network-units 31 and 32 and sub-network 33 for setting up said call (and/or network-units 31 and 32 exchange set-up-packets with each other via sub-network 33 for setting up said call). Then, the first user at terminal 1 and a second user at terminal 2 can speak with each other through exchanging voice-packets via the Internet Protocol. Said voice-packets comprise audio and may further comprise video, in which case said call is an audiovisual call, with both users not just speaking with each other but also looking at each other at their monitors/diplays.

To stimulate the market introduction of VoIP (more) service-orientatedly, the system according to the invention is provided with storage-station 4 in network 3 for storing information to be supplied during said call from storage station 4 to terminal 2 (or terminal 1) in the form of one or more data-packets via the Internet Protocol in response to one or more trigger-packets originating from terminal 1 (or terminal 2) via the Internet Protocol. This is an additional service giving said first user (or said second user) the option of initiating said supplying of information, like for example a picture of said first user (or said second user) or his homepage etc. prestored in storage-station 4, and said second user (or said first user) receives this information during said call, which information supports said call.

Thereto, during said call, to supply said information from terminal 1 to terminal 2, said first user at terminal 1 enters an address (for example via the keyboard or the mouse of mmi 12 or via a microphone of the headset of mmi 12 and voice recognition software etc.) like for example a Uniform Resource Locater or URL etc., which address defines storage-station 4, and is converted by either processor-system 10 directly or by processor-system 10 indirectly after having communicated with for example network-unit 31 and/or network-unit 34 and/or sub-network 33 and under control of said VoIP software into an IP address defining storage-station 4. Or, said first user enters said IP address directly (for example via the keyboard or the mouse of mmi 12 or via a microphone of the headset of mmi 12 and voice recognition software etc.). Due to already communicating via the Internet Protocol, said call for example takes place via a first pc-window, and the communication with storage-station 4 takes place via a second pc-window (like when for example simultaneously surfing different websites etc.).

In case of a so-called push system, the sending side is in control, and in response to the entering of said address, one or more trigger-packets are sent to storage-station 4. At storage-station 4, processor-system 40 detects said trigger-packets, which comprise the address of terminal 2 and which comprise a definition (like for example an address of said terminal 1 etc.) defining the information to be supplied, and reads from memory 43 said information and sends it in the form of one or more data-packets via the Internet Protocol and via network-unit 34 and sub-network 33 and network-unit 32 to terminal 2.

In case of a so-called pull system, the receiving side is in control, and in response to the entering of said address, one or more trigger-packets are sent to terminal 2. At terminal 2, processor-system 20 detects said trigger-packets and in response generates further trigger-packets (if and only if agreed with), and sends said further trigger-packets to storage-station 4. At storage-station 4, processor-system 40 detects said further trigger-packets, which comprise the address of terminal 2 and which comprise a definition (like for example an address of said terminal 1 etc.) defining the information to be supplied, and reads from memory 43 said information and sends it in the form of one or more data-packets via the Internet Protocol and via network-unit 34 and sub-network 33 and network-unit 32 to terminal 2.

In terminal 2, processor-system 20 detects said data-packets, and due to already communicating via the Internet Protocol, with said call for example taking place via a first pc-window, the information in said data-packets is communicated via a second pc-window (like when for example simultaneously surfing different websites etc.), and said second user gets to see (and possibly hear) said information for example comprising a picture with an image or a first user's facial expression etc. together with his favorite saying or exclamation etc. as prestored in storage-station 4.

In addition, several information-parts can be stored in memory 43, with each information-part being supplyable in the form of at least one data-packet via the Internet Protocol, with said trigger-packets and further trigger-packets comprising an indication for selecting at least one information-part to be supplied. Then said first user has the possibility of selecting information-parts prestored in said storage-station. The information-parts for example each comprise an actor, a cartoon character etc. each one for example saying his thing or generating his exclamation etc. A first group of information-parts is for example free available and/or is for example exchanged without being billed, a second group for example needs a subscription and/or is for example exchanged while being billed etc.

During said setting up of said call, negotiations can be held and information can be exchanged for example via said set-up-packets or via other packets like for example negotiation-packets etc. for negotiating whether and which kind of information(-parts) are allowed to be exchanged during said call. The information(-parts) prestored in memory 43 can be downloaded from a terminal by a user at said terminal or from another location by said user by for example visiting the website of said storage-station. Either said downloading is billed or not, or said supplying of certain information(-parts) is billed or not.

Connections 14,24 can be mobile connections like GPRS connections or 3G connections, can be cordless connections like DECT connections, and can be fixed connections like analog connections, Integrated Service Digital Network (ISDN) connections, Digital Subscriber Line (DSL) connections etc. Said network-units 31 and 32 and 34 can be access systems comprising switches, routers, bridges, base stations, network nodes etc. Said storage-station 4 preferably forms part of an access system. Network-units 31 and 32 and 34 take care of combining several kinds of packets, like for example the combining by network-unit 32 of voice-packets originating from terminal 1 and data-packets originating from storage-station 4 etc.

The expression "for" in for example "for exchanging" and "for receiving" and "for transmitting" and "for storing " etc. does not exclude that other functions are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprises/included as well. The terms "a" and "an" do not exclude the possible presence of one or more pluralities.

The invention is based upon an insight, inter alia, that the VoIP call itself should be made more interesting when stimulating a market introduction, and is based upon a basic idea, inter alia, that, in a packet environment, data-packets with prestored supporting information can be combined easily with voice-packets.

The invention solves the problem, inter alia, of providing a system which stimulates a market introduction of VoIP more service-orientatedly, and is advantageous, inter alia, in that additional services for VoIP have been created.

## Claims

1. System for exchanging voice-packets via an Internet Protocol and comprising a first terminal (1) for transmitting said voice-packets via a network (3) to a second terminal (2) for receiving said voice-packets, which voice-packets form part of a call, **characterised in that** said network (3) comprises a storage-station (4) for storing information to be supplied during said call to said second terminal (2) in the form of at least one data-packet via the Internet Protocol in response to at least one trigger-packet originating from said first terminal (1) via the Internet Protocol.

2. System according to claim 1, **characterised in that** said voice-packets comprise at least audio, with said data-packet comprising at least video.

3. System according to claim 1 or 2, **characterised in that** said trigger-packet is sent from said first terminal (1) to said storage-station (4).

4. System according to claim 3, **characterised in that** said information comprises information-parts, with said trigger-packet comprising an indication for selecting at least one information-part to be supplied during said call to said second terminal (2).

5. System according to claim 1 or 2, **characterised in that** said trigger-packet is sent from said first terminal (1) to said second terminal (2), with said second terminal (2) in response to said trigger-packet generating a further trigger-packet to be sent during said call to said storage-station (4) via the Internet Protocol.

6. System according to claim 5, **characterised in that** said information comprises information-parts, with said trigger-packet and said further trigger-part comprising an indication for selecting at least one information-part to be supplied during said call to said second terminal (2).

7. First terminal (1) for use in a system for exchanging voice-packets via an Internet Protocol and comprising said first terminal (1) for transmitting said voice-packets via a network (3) to a second terminal (2) for receiving said voice-packets, which voice-packets form part of a call, **characterised in that** said network (3) comprises a storage-station (4) for storing information to be supplied during said call to said second terminal (2) in the form of at least one data-packet via the Internet Protocol in response to at least one trigger-packet originating from said first terminal (1) via the Internet Protocol.

8. Second terminal (2) for use in a system for exchanging voice-packets via an Internet Protocol and comprising a first terminal (1) for transmitting said voice-packets via a network (3) to said second terminal (2) for receiving said voice-packets, which voice-packets form part of a call, **characterised in that** said network (3) comprises a storage-station (4) for storing information to be supplied during said call to said second terminal (2) in the form of at least one data-packet via the Internet Protocol in response to at least one trigger-packet originating from said first terminal (1) via the Internet Protocol.

9. Storage-station (4) for use in a system for exchanging voice-packets via an Internet Protocol and comprising a first terminal (1) for transmitting said voice-packets via a network (3) to a second terminal (2) for receiving said voice-packets, which voice-packets form part of a call, **characterised in that** said network (3) comprises said storage-station (4) for storing information to be supplied during said call to said second terminal (2) in the form of at least one data-packet via the Internet Protocol in response to at least one trigger-packet originating from said first terminal (1) via the Internet Protocol.

10. Method for use in a system for exchanging voice-packets via an Internet Protocol and comprising a first terminal (1) for transmitting said voice-packets via a network (3) to a second terminal (2) for receiving said voice-packets, which voice-packets form part of a call, **characterised in that** said network (3) comprises a storage-station (4) for storing information, with said method comprising the step of supplying said information during said call to said second terminal (2) in the form of at least one data-packet via the Internet Protocol in response to at least one trigger-packet originating from said first terminal (1) via the Internet Protocol.
